# Europäisches Patentamt

# European Patent Office

# Office européen des brevets

(19)

(11) Veröffentlichungsnummer: **0 300 476 B1**

(12) # EUROPÄISCHE PATENTSCHRIFT

(45) Veröffentlichungstag der Patentschrift: **23.03.94**

(51) Int. Cl.⁵: **H04L 27/22**

(21) Anmeldenummer: **88111756.8**

(22) Anmeldetag: **21.07.88**

(54) **Aufbereitung von Steuersignalen zur Auflösung der Phasenmehrdeutigkeit bei n-PSK-Signalen.**

(30) Priorität: **24.07.87 DE 3724536**
   **24.07.87 DE 3724537**

(43) Veröffentlichungstag der Anmeldung:
   **25.01.89 Patentblatt 89/04**

(45) Bekanntmachung des Hinweises auf die
   Patenterteilung:
   **23.03.94 Patentblatt 94/12**

(84) Benannte Vertragsstaaten:
   **DE FR GB IT**

(56) Entgegenhaltungen:
   **DE-A- 3 600 905**
   **US-A- 3 806 647**

(73) Patentinhaber: **ANT Nachrichtentechnik GmbH**
   **Gerberstrasse 33**
   **D-71522 Backnang(DE)**

(72) Erfinder: **Heichler, Johannes, Dipl.-Ing.**
   **Haselweg 8**
   **D-7157 Murrhardt 3(DE)**

**Beschreibung**

Die Erfindung betrifft ein Verfahren gemäß Oberbegriff des Patentanspruchs 1, eine Anordnung zum Durchführen dieses Verfahrens, sowie eine Verwendung der Anordnung.

Bei der Decodierung von Faltungscodesignalen, beispielsweise mittels eines Viterbi-Decoders, werden grundsätzlich Daten aus einem PSK-Demodulator zur Verfügung gestellt, wobei die Anzahl der Datenströme in bekannter Weise abhängt von der Zahl der Phasencodierungs-Zustände. Beispielsweise ist sie zwei bei QPSK-Modulation. In diesem Fall erhält man also am Ausgang des Demodulators zwei Datenströme zu je einem Bit, die naturgemäß mit Störungen wie Rauschen, Amplitudenfehlern etc. behaftet sind.

Es gibt jedoch noch weitere Störmöglichkeiten, die nicht mit der aktuellen Qualität des Empfangs zusammenhängen, sondern systemimmanent sind: Es handelt sich um die sogenannte "Phase Ambiguity" oder auch "Phasenmerhdeutigkeit, die mit der Trägerrückgewinnung im Demodulator zusammenhängt. Sie äußert sich im Datenstrom derart, daß beide Bits

a) bei 180 Grad Fehlern invertiert werden,

b) bei + 90 Grad Fehlern einer invertiert und beide vertauscht erscheinen,

c) bei - 90 Grad Fehlern der andere invertiert und beide vertauscht sind.

Aus der EP 52 463 A1 ist es prinzipiell bekannt, mittels eines "Phase Ambiguity Detectors" falsche Übergänge im Trellisdiagramm, hervorgerufen durch Rauschen oder "Phase Ambiguity", zu unterscheiden.

Aus der US-A- 3,806,647 ist eine Anordnung zur Auflösung einer Phasenmehrdeutigkeit bekannt, die zwischen einem 4-PSK Demodulator und einem Schwellwertdekoder zur Fehlerkorrektur vorgesehen ist. Es wird eine Faltungscodierung angewendet. Die Anordnung überprüft Korrekturbits, die ihr vom Schwellwertdekoder bzw. vom Faltungsdekoder zugeführt werden. Wenn die Zahl der Korrekturbits einen Normalwert bei nicht auftretender Phasenmehrdeutigkeit übersteigt, wechselt die Anordnung ihren Ausgangszustand. Jeder dieser Ausgangszustände regelt mindestens einen der möglichen Phasenmehrdeutigkeitsfehler. Bei einem Fehlerzustand wird ein Suchpuls generiert, dessen Perioden mittels eines Zählers gezählt werden. Dieser Zähler besitzt acht mögliche Zustände. In Abhängigkeit des Zählerzustandes werden die PSK-Kanäle so lange vertauscht und/oder invertiert, bis die richtige Zuordnung der Datenbits und Paritybits erreicht ist.

Aufgabe der Erfindung ist es, ein Verfahren ausgehend vom Oberbegriff des Patentanspruchs 1 anzugeben, welches eine Phasenmehrdeutigkeit sicher erkennt und eine adaptive Korrektur ermöglicht. Außerdem soll eine Anordnung zum Durchführen dieses Verfahrens sowie eine Verwendung angegeben werden. Diese Aufgabe wird bezüglich des Verfahrens durch die Merkmale des Patentanspruchs 1, bezüglich der Anordnung durch die Merkmale des Patentanspruchs 3 und bezüglich der Verwendung durch die Merkmale des Patentanspruchs 12 gelöst. Die weiteren Patentansprüche zeigen Ausgestaltungen des Verfahrens bzw. der Anordnung auf.

Die Erfindung weist insbesondere den Vorteil auf, daß die Bitfehlerrate bei der Synchronisation während der Decodierung von Faltungscodesignalen durch ein adaptives Korrekturverhalten verbessert wird. Außerdem werden bei dem Verfahren nach der Erfindung Steuersignale gewonnen, die nicht aus einem Schätzprozess wie etwa beim Verfahren gemäß EP 52 463 A1 abgeleitet sind. Die Zuverlässigkeit der Steuersignale ist daher sehr hoch und die Korrekturzeit sehr kurz.

Zur Generierung eines Phasenfehlersignals, welches zur Aufbereitung der Steuersignale notwendig ist, wird unmittelbar die Differenz zwischen minimaler und maximaler Pfadmetrik herangezogen, da sie ein eindeutiges Kriterium für die aktuelle Qualität des empfangenen Faltungscodesignals ist. Durch diese Maßnahme wird sichergestellt, daß das Phasenfehlersignal mit großer Wahrscheinlichkeit nur dann auftritt, wenn ein echter Phasenfehler vorliegt. Durch Anpassung an die Kanalverhältnisse ergibt sich eine sichere Synchronisation.

Anhand der Zeichnungen wird nun ein Ausführungsbeispiel der Erfindung näher erläutert. Es zeigen

Fig. 1     ein Übersichtsschaltbild eines Viterbi-Decoders,

Fig. 2     ein Transformationsnetzwerk,

Fig. 3     eine Schaltung zur Phasenmehrdeutigkeitsauflösung und

Fig. 4     eine Schaltung zur Gewinnung eines Phasenfehlersignals,

Fig. 5     eine weitere Schaltung zur Gewinnung eines Phasenfehlersignals.

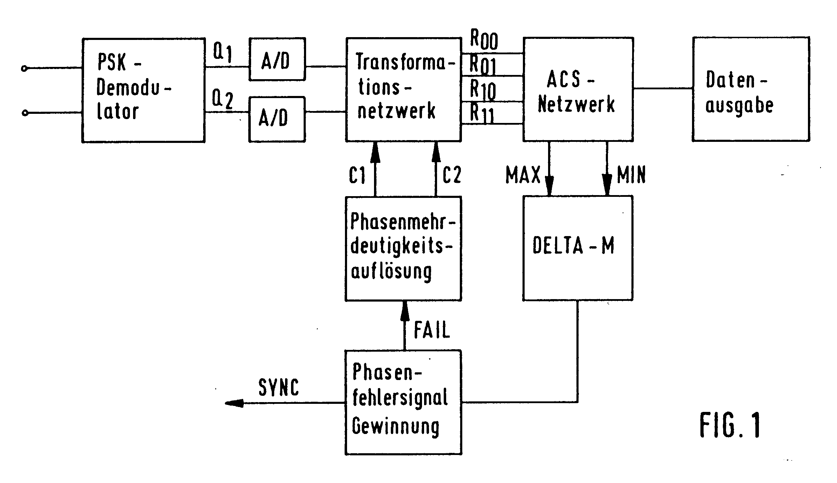

Dem Viterbi-Decoder gemäß Figur 1 ist eingangsseitig ein PSK-Demodulator vorgeschaltet, der im Falls einer QPSK-Modulation zwei Datenströme $Q_1$ und $Q_2$ zu je einem Bit abgibt. Diese Datenströme sind naturgemäß mit Störungen wie Rauschen, Amplitudenfehlern etc. behaftet. Es gibt jedoch noch weitere Störmöglichkeiten, die nicht mit der aktuellen Qualität des Empfangs zusammenhängen, sondern leider systemimmanent sind. Hier handelt es sich um die sogenannte "Phase Ambiguity" (Phasenmehrdeutigkeit), die mit der Trägerrückgewinnung im Demodulator zusammenhängt. Sie äußert sich, daß beide Bits

a) bei einem 180° Phasenfehler invertiert werden,

b) bei einem + 90° Phasenfehler ein Bit invertiert und beide Bits vertauscht erscheint/erscheinen,

c) bei einem - 90° Phasenfehler das andere Bit invertiert und beide Bits vertauscht erscheint/erscheinen.

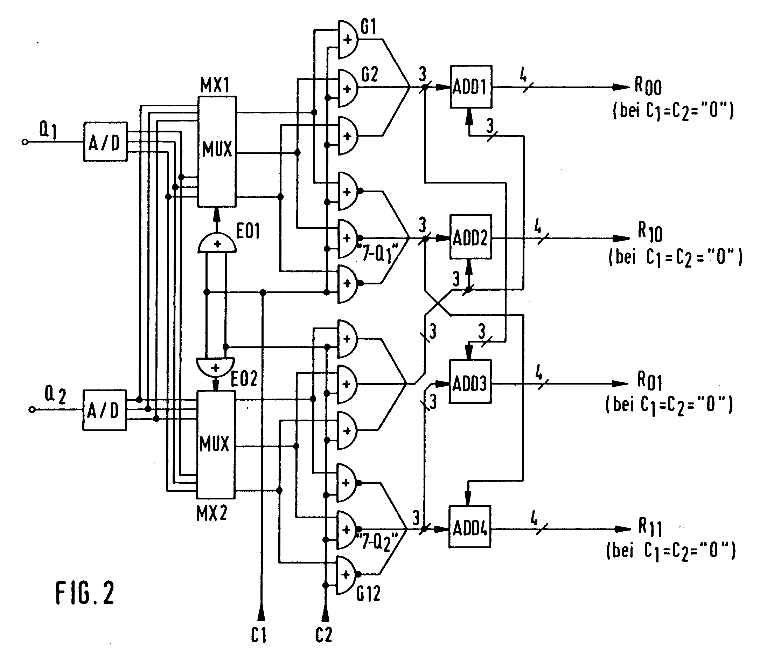

Um diese Vertauschung und Invertierung zu machen, befindet sich am digitalen Eingang des Viterbi-Decoders -also unmittelbar hinter den A/D-Wandlern - ein Transformationsnetzwerk, welches in Form eines Stellgliedes die Vertauschung und Invertierung aufzuheben, bzw. rückgängig zu machen im Stande ist. Zur Ansteuerung dieses Stellgliedes sind Steuersignale nötig. Beim hier aufgezeigten Beispiel einer QPSK-Modulation sind als Steuersignale zwei Steuerbits C1 und C2 nötig. Fig. 2 zeigt ein Beispiel für ein solches Transformationsnetzwerk, welches ausführlich in der DE Patentanmeldung 36 00 905.9 beschrieben ist, jedoch mit dem Unterschied, daß die Steuersignale C1 und C2 gemäß folgender Tabelle umcodiert werden:

| Phasenwinkel | C1 und C2 vor der Umcodierung | | C1 und C2 nach der Umcodierung | |
|---|---|---|---|---|
| 0° | 0 | 0 | 0 | 0 |
| 90° | 0 | 1 | 0 | 1 |
| 180° | 1 | 1 | 1 | 0 |
| 270° | 1 | 0 | 1 | 1 |

Natürlich ist es auch möglich, das Transformationsnetzwerk hardwaremäßig so aufzubauen, daß keine zusätzliche Umcodierung notwendig ist.

Das Transformationsnetzwerk umfaßt Multiplexer MX1 und MX2 zur kreuzweisen Kanalvertauschung, die jeweils über ein EX-OR-Glied EO1, bzw. EO2 von den Steuerbits C1 und C2 gesteuert werden. Die Ausgangssignale der beiden Multiplexer werden entsprechend der Zahl $n = 8$ der Quantisierungsstufen (Soft-Decision) bei der A/D-Wandlung einmal auf EX-OR-Gatter und einmal EX-NOR-Gatter G1 bis G12 geführt.

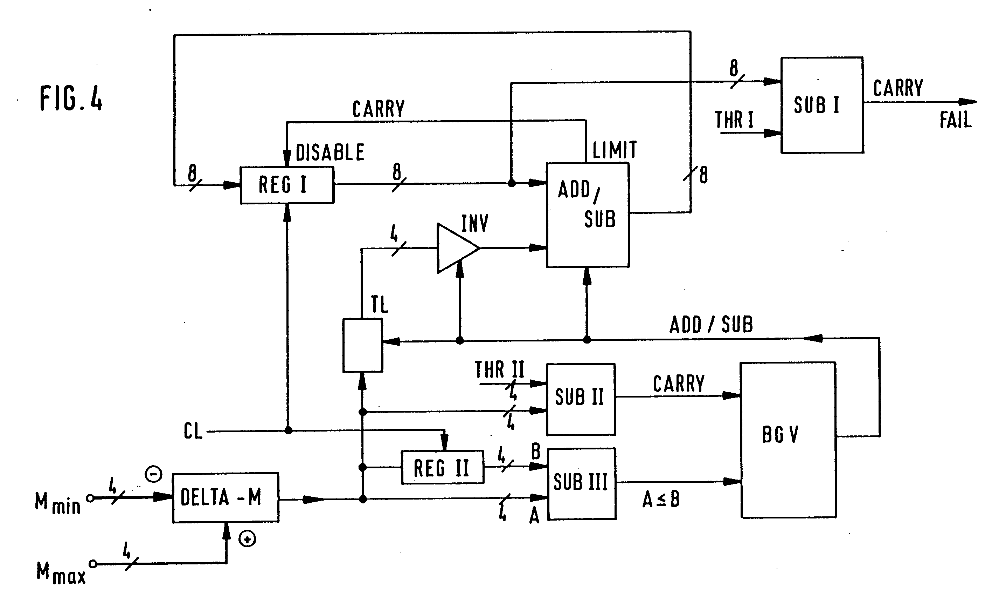

Die quantisierten Größen $Q_1$ und $Q_2$ stehen damit jeweils einmal invertiert und nichtinvertiert zur Verfügung. Mittels nachgeschalteten Addierern ADD1 bis ADD4 sind am Ausgang des Transformationsnetz-werkes die vier Zweigmetriken $R_{00}$, $R_{10}$, $R_{01}$ und $R_{11}$ für die Weiterverarbeitung in den ACS-Netzwerken (Add-Compare-select) des Viterbi-Decoders verfügbar. Die ACS-Netzwerke werden hier nicht weiter beschrieben, da sie der einschlägigen Fachwelt bekannt sind - vgl. beispielsweise Proceedings of the IEEE, Vol. 61, No. 3, März 1973, Seiten 268 bis 277, insbesondere Figur 10, Seite 273 nebst Beschreibung. Ein besonders geeignetes ACS-Netzwerk ist in der DE Patentanmeldung 36 00 905.9 aufgezeigt. Das ACS-Netzwerk liefert unter anderem die maximale und die minimale Pfadmetrik, deren Differenz mittels der Stufe DELTA-M gewonnen wird. Aus dieser Pfadmetrikdifferenz wird nun das Phasenfehlersignal FAIL gewonnen, wie in Zusammenhang mit Fig. 4 noch näher erläutert wird. Es dient als Steuersignal für die Stufe "Phasenmehrdeutigkeitsauflösung", die die Steuerbits C1 und C2 für das Transformationsnetzwerk erzeugt, bzw. zur Bereitstellung eines Synchronisiersignals SYNC etwa bei Anwendung einer Code-Punktierung.

Die Ansteuerung des Transformationsnetzwerkes kann grundsätzlich auf mehrere Arten erfolgen. Als Ausführungsbeispiel wird nun die Q-PSK Modulation behandelt. Es gibt dann vier verschiedene Möglichkeiten der richtigen Phasenlage, codiert mit den Zuständen 00, 11, 01, 10. Zu deren Abdeckung sind zwei Steuerbits C1 und C2 nötig. Bei n-PSK Signalen sind entsprechend mehr Steuerbits notwendig.

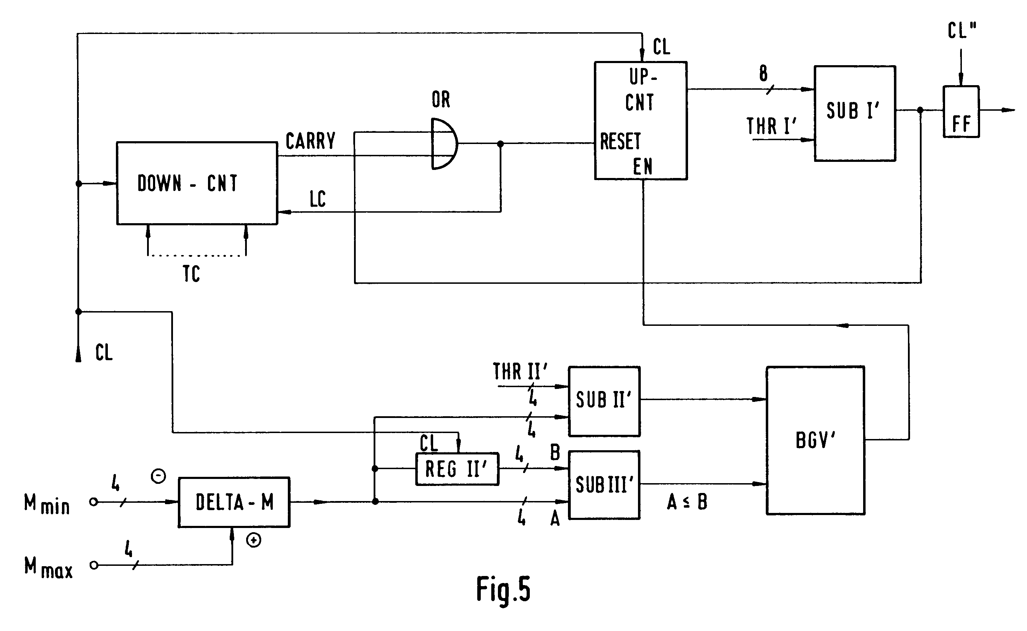

Springt nun die Trägerphase des Demodulators von einem Zustand zu einem anderen, so ist zu untersuchen, ob die Reaktion des Decoders pseudo-zufällig oder aber in irgendeiner Weise determiniert zu erfolgen hat. Bei den Verfahren nach dem Stand der Technik wurde diese Reaktion pseudo-zufällig vorgenommen. Bei der Erfindung hingegen wird von der Erkenntnis ausgegangen, daß das System Demodulator von sich aus eine Vorzugsrichtung bei Phasensprüngen aufweist. Dies hat zur Konsequenz, daß der Decoder hierin eine Zusatzinformation zur Verfügung gestellt bekommt, die er bei entsprechender Verarbeitung zur Reduktion der Korrekturzeit verwenden kann. Die Ansteuerung des Transformationsnetzwerkes als Stellglied soll also lernend -adaptiv - erfolgen. Dabei wird, wie in Zusammenhang mit Fig. 4 bzw. Fig. 5 noch erläutert wird, die Differenz aus maximaler und minimaler Pfadmetrik ausgewertet, da sie ein eindeutiges Kriterium für die aktuelle bzw. voraktuelle Qualität des Empfangs ist.

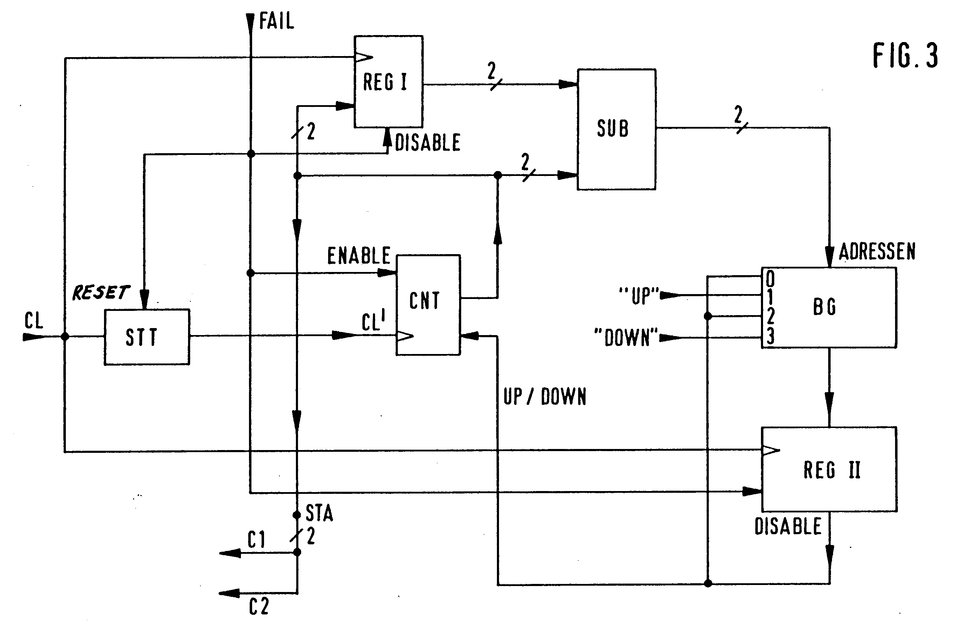

Doch zunächst zur Stufe Phasenmehrdeutigkeitsauflösung, die unmittelbar zur Ansteuerung des Stellgliedes - Transformationsnetzwerkes - dient und sich die Vorzugsrichtung merkt. Ihre Schaltung ist in Fig. 3 dargestellt. Das Grundprinzip der adaptiven Ansteuerung ist es, den neuen Ansteuerzustand mit dem letzten, d.h. vorhergehenden Ansteuerzustand zu vergleichen und daraufhin eine entsprechende Reaktion vorzunehmen.

Zunächst sei der Zähler CNT betrachtet. Er wird durch ein Phasenfehlersignal FAIL, dessen Erzeugung in Zusammenhang mit Fig. 4 bzw. Fig. 5 erläutert wird, über seinen ENABLE-Eingang zum Zählen veranlaßt, wobei dies mit einer Geschwindigkeit geschieht, die der Erkennungsgeschwindigkeit des Viterbi-Decoders angepaßt sein muß. Zwischen Finden des richtigen Phasenzustandes und Beruhigung der Differenzmetrik vergeht eine gewisse Zeit, die abgewartet werden muß. Aus diesem Grund erhält der Zähler CNT seine Zählimpulse nicht direkt vom Systemtakt CL des Viterbi-Decoders, sondern über einen Systemtaktteiler STT, der den Systemtakt CL herunterteilt. Dieser Systemtaktteiler STT berücksichtigt die Metrikberuhigungszeitkonstante. Der Zähler CNT zählt nun einige Taktimpulse CL' entsprechend der Binärwertigkeit, die ihm vom Ausgang des Systemtaktteilers STT geliefert werden und gibt seinen Zählerstand an einen Subtrahierer SUB weiter. Der Zählerstand wird auch im Speicher REGI als 2 Bit Information abgelegt. Der im Speicher REGI abgelegte Zählervorzustand wird mit dem aktuellen Zählerstand mittels des Subtrahierers SUB verglichen. Dieser Subtrahierer SUB stellt die Richtung eines Phasensprunges fest. Das Vergleichsergebnis steuert einen Befehlsgeber BG über einen Adreßsteuereingang. Der Befehlsgeber BG erhält an seinen vier Dateneingängen 0, 1, 2 und 3 Befehlssätze zum Aufwärts "UP" -oder Abwärtszählen "DOWN" - Eingang 1 bzw. 3 - oder zur Beibehaltung des Vorzustandes - Eingänge 0 und 2 - für eine Phasensprungdifferenz von 180°. Schaltungstechnisch kann der Befehlsgeber BG durch einen Multiplexer als Funktionsgenerator oder durch einen Festspeicher - EPROM -realisiert werden. Die Ausgangsinformation des Befehlsgebers BG gelangt auf einen Speicher REGII, der mit dem Auftreten des ihm über seinen DISABLE-Eingang zugeführten FAIL-Signals seinen Inhalt nicht mehr ändern kann. Für diesen Zeitraum stellt die Ausgangsinformation des Speichers REGII dem Zähler CNT über dessen Zählrichtungssteuereingang die Information zum Abwärts- oder Aufwärtszählen - UP/DOWN - zur Verfügung. Verschwindet das FAIL-Signal, so wird der Speicher REGII mit dem nächsten Systemtaktimpuls CL neu aktualisiert.

Auf der anderen Seite geschieht dies auch mit dem Speicher REGI, dem das FAIL-Signal über seinen DISABLE-Eingang zugeführt ist, so daß am Ausgang des Subtrahierers SUB eine 0 erscheint. Dies verursacht im Inhalt des Speichers REGII jedoch keinen Fehler, da er sich über den 0-Eingang des Befehlsgebers BG selbst hält. Die anderen Zustände an den Dateneingängen des Befehlsgebers BG sind wie folgt: Zustand "UP" für den Eingang 1, weil dann der Zählerstand des Zählers CNT größer als der des Speichers REGI geworden ist, eine zukünftige Zählung also aufwärts zu erfolgen hat.

Der alte Zustand wird außerdem noch auf den Eingang 2 gegeben, da es sich hierbei um einen 180°- Sprung handelt, der zweideutig - also vorwärts oder rückwärts - entstanden sein kann. Das System nimmt hier also die alte Vorzugsrichtung an. Schließlich soll Zustand "DOWN" an Eingang 3 gelangen, denn in diesem Fall hat sich der Zählerstand gegenüber früher um eins verringert. Dann soll auch in Zukunft subtrahiert -dekrementiert - werden. Damit die Schaltung das geschilderte Verhalten zeigt, wird das n-PSK-Signal erfindungsgemäß so codiert, daß die Binärwertigkeit dem Phasenwinkel proportional ist. Die Zuordnung der Phasenzustände für eine Q-PSK-Modulation ist demzufolge:

| Phasenwinkel | Binärzustände |
|---|---|
| 0° | 0 0 |
| 90° | 0 1 |
| 180° | 1 0 |
| 270 ( = -90)° | 1 1 |

Die Differenz zwischen zwei Schritten beträgt also immer 90°. Durch die binär aufsteigende Codierung der einzelnen Phasenzustände kann die Sprungrichtung durch Differenzbildung zwischen altem und neuem Wert gewonnen werden.

Im Falle einer 8-PSK Modulation ist die Codierung entsprechend vorzunehmen:

4

| Phasenwinkel | Binärzustände |
|:---:|:---:|
| 0° | 0 0 0 |
| 45° | 0 0 1 |
| 90° | 0 1 0 |
| 135° | 0 1 1 |
| 180° | 1 0 0 |
| 225° | 1 0 1 |
| 270° | 1 1 0 |
| 315° | 1 1 1 |

Diesen Binärzuständen werden die Adressen des Befehlsgebers BG zugeordnet. Der Befehlsgeber BG arbeitet dann beispielsweise wie folgt:

Phasensprungsrichtung > 0 → Aufwärtszählen beim nächsten Phasensprung,

Phasensprungrichtung < 0 → Abwärtszählen beim nächsten Phasensprung.

Bei einem Phasensprung von 180° tritt eine Zweideutigkeit auf. Um diese aufzulösen, wird der Befehlsgeber mit einem weiteren Adresseneingang ausgestattet, so daß für 180° zwei verschiedene Werte erhältlich sind, z.B.

1 100 für 180° und "UP"-Zustand

und 0 100 für 180° und "DOWN"-Zustand.

Die Steuersignale C1 und C2 sind am Steuersignalausgang STA verfügbar und stellen den Zählerstand des Zählers CNT dar. Die Speicher REGI und REGII werden vom Systemtakt CL gesteuert.

Bevor die Erzeugung des Phasenfehlersignals gemäß Figur 4 erläutert wird soll dargelegt werden, warum gerade die Differenz zwischen maximaler und minimaler Pfadmetrik zur Ableitung des Fehlersignals herangezogen wird. Unter der Voraussetzung, daß mittels des ACS-Netzwerkes die minimale Pfadmetrik genügend schnell extrahiert werden kann, steht ein wichtiges Kriterium zur Beurteilung der Empfangsqualität zur Verfügung. Kleine Pfadmetriken kennzeichnen bei dem beispielhaften Viterbi-Decoder "gute Pfade". Umgekehrt gilt, daß große Metriken sehr unwahrscheinliche Pfade kennzeichnen und speziell die maximale Metrik mit dem unter allen Umständen auszuschließenden Pfad einhergeht.

Die letztere Aussage ist aber - genau wie die über die minimale Metrik - eine eindeutige Beurteilung der Empfangsqualität, wenn auch mit entgegengesetztem Vorzeichen. Das ist leicht einzusehen, wenn man bedenkt, daß für den Fall eines fehlenden Empfangssignals (nur Rauschen) eine totale Nivellierung aller Pfadmetriken stattfindet, d.h. der Decoder findet überhaupt keinen relevanten Code mehr und kann somit auch keine States mehr nach Qualität klassifizieren. Numerisch ausgedrückt, treffen sich alle Metriken bei einem Mittelwert, bei QPSK zwischen 0 und 15, also etwa bei 7...8. Damit wird die Differenzmetrik - sie soll fortan auch Deltametrik DELTA-M genannt werden - Null. Im besten Empfangsfalle ist sie hingegen 15. Sie überstreicht also den gesamten, für Metriken definierten Wertebereich und nicht nur die Hälfte, was der Fall wäre, wenn man nur die minimale oder maximale zur Hand nähme.

Pfadmetriken setzen sich aus einem Speicherinhalt und den Zweigmetriken zusammen. Rauschen äußert sich bei den Zweigmetriken als Abweichung vom Idealwert, der im Bereich von 0 bis 14 liegen kann. Genauer gesagt, es gibt genau drei Idealwerte (störungsfreier Empfang vorausgesetzt). Nämlich 0 für das passende Muster, 14 für das entgegengesetzte Muster und 7 für die beiden verbleibenden Mischmuster. Wiederum ist wichtig festzuhalten, daß eine gute Empfangsqualität lediglich mit einer großen Eindeutigkeit der Werte einhergeht, und nicht einfach mit einer Minimierung aller Werte.

Dieser Sachverhalt aber ist entscheidend für die Erkennung von Fehlphasenzuständen. Solche nämlich bewirken die Berechnung völlig falsch extremwertiger Zweigmetriken, was natürlich um so extremer ausfällt, je weniger Rauschen beteiligt ist. Hierbei sei auf die Gleichungen zur Berechnung der Zweigmetriken hingewiesen:

$R_{00} = Q_1 + Q_2$

$R_{01} = Q_1 + 7 - Q_2$

$R_{10} = 7 - Q_1 + Q_2$

$R_{11} = 7 - Q_1 + 7 - Q_2$

Dabei sind $Q_1$ und $Q_2$ die bekannten Soft-Decisionwerte und laufen von 0 bis 7.

Rauschen hat nun folgenden Einfluß:

Angenommen, es handelt sich um das korrekte Empfangsmuster "01", dann muß $Q_1$ den Wert 0, $Q_2$ den Wert 7 annehmen, und $R_{01}$ wird zu Null. Damit und mit einem minimalen Speicherwert wird die Metrik des optimalen Pfades gebildet, die folglich minimal ausfällt.

Jetzt werde Rauschen auf den Kanal gegeben.

Dann bewegen sich fortan die statistischen Mittelwerte über mehrere Bits gemittelt für $Q_1$ zwischen 0 und 3.5 und für $Q_2$ zwischen 7 und 3.5.

Setzt man das extremwertig in obige Gleichung ein, so erhält man für den maximal auftretenden Wert:

$$R_{01} = 3.5 + 7 - 3.5 = 7 \text{ (nur Rauschen)}$$

und für den minimal auftrenden Wert:

$$R_{01} = 0 + 7 - 7 = 0 \text{ (Störungsfreiheit)}.$$

Das ist der "Streubereich", der je nach Rauschen hier auftritt.

Dabei wurde die ohne Zweifel erlaubte Annahme gemacht, daß sich die Werte $Q_1$ und $Q_2$ mit wachsendem Rauschen gegen einen Mittelwert von 3.5 zusammenziehen, und zwar der eine von unten und der andere von oben her. Jetzt trete ein Phasensprung von + 90 Grad auf. Dann wird für die bereits geschilderte Vertauschung und Invertierung:

$$Q_1 \rightarrow Q_2 \text{ und } Q_2 \rightarrow - Q_1$$

Jetzt bewegt sich das "neue" $Q_1$ zwischen 7 und 3.5 und das "neue" $Q_2$ zwischen 7 und 3.5 wegen der Inversion. Wiederum seien beide Fälle diskutiert:

$$R_{01} = 3.5 + 7 - 3.5 = 7 \text{ (Rauschen)}$$
$$R_{01} = 7 + 7 - 7 = 7 \text{ (störungsfrei)}$$

Das Ergebnis ist insofern interessant, als daß es nicht mehr unter die "7" kommt und somit eine "schlechte" Situation anzeigt. Es sei hier bemerkt, daß sich die Werte bei einem 180-Grad-Sprung zwischen 7 und 14 bewegen, also die Sachlage noch eindeutiger wird. Ähnlich verhält es sich mit den anderen Phasenzuständen und Zweigmetriken, was man leicht nachprüfen kann.

Fig. 4 zeigt nun eine erste Schaltung zur Erzeugung des Phasenfehlersignals FAIL, das die Schaltung zur Phasenmehrdeutigkeitsauflösung zugeführt bekommt. Die Metrikbewegung bei der Viterbi-Decodierung reagiert äußerst empfindlich auf Phasensprünge. Fehlphasenzustände bewirken die Berechnung völlig falsch extremwertiger Zweigmetriken, was umso extremer ausfällt, je weniger Rauschen beteiligt ist. Die Schaltung gemäß Fig. 4 ist in der Lage, solche Fehlphasenzustände zu erkennen.

Aus der Differenzmetrik werden im wesentlichen drei Größen gewonnen.

1) Der zeitliche Differentialquotient, bzw. nur dessen Vorzeichen,

2) das Überschreiten einer Schwelle als Alarmsignal,

3) eine zeitliche Summe von Zahlen, die eine Zeitkonstante bis zum Erreichen einer Schwelle darstellt, was dann das FAIL-Signal setzt.

Über die letzte Größe muß noch einiges gesagt werden:

Sie soll sog. "falsche Alarme" bei kurzen Störungen, deren Amplitude jedoch hoch sein kann, verhindern helfen.

Bei der Realisierung gemäß Figur 4 wird noch ein Schritt weitergegangen: Inkrement und Dekrement sollen nicht konstant, sondern abhängig von der aktuellen Empfangsqualität sein. Somit erhält man je nach Störungssituation verschiedene Beiträge. Algorithmisch soll die Festlegung derart sein, daß im Störfalle mit dem Einerkomplement 15-DELTA-M der Deltametrik inkrementiert wird, dekrementiert werden soll jedoch mit DELTA-M selbst. Das hat folgenden Grund: Bei zunächst gutem Empfang ist die Deltametrik hoch, also ihr Einerkomplement niedrig. Handelt es sich um eine kurze Störung, etwa um einen Rauscheinbruch, so wird mit der nur wenig angestiegenen 15-DELTA-M inkrementiert: Es gibt bei niedrig gelegter Schwelle keinen falschen Alarm.

Tritt dagegen ein Phasensprung auf, so steigt, wie erläutert, das Einerkomplement stark an, weil DELTA-M selbst sehr klein wird. Somit wird die Schwelle sehr schnell erreicht, was ein Setzen des FAIL-Signals zur Konsequenz hat. Die Re-Synchronisierzeit soll jedoch ebenfalls verkürzt werden. Deshalb soll das Dekrement mit der dann ansteigenden DELTA-M erfolgen, und nicht früher, wenn etwa durch einen Stör-Burst ein scheinbar richtiger Code vorgetäuscht wird. Bei wirklicher Re-Synchronisation erfolgt das Decrement hingegen rasch, da sich die Deltametrik erneut aufbaut.

Gemäß Figur 4 wird die Differenz zwischen minimaler und maximaler Pfadmetrik - Deltametrik - in der Stufe DELTA-M durch Subtraktion gebildet. Der Ausgang der Stufe DELTA-M ist über einen schaltbaren Inverter INV, z. B. ein EXOR-Gatter, mit dem ersten Dateneingang eines umschaltbaren Addierers/Subtrahierers ADD/SUB verbunden. Gegebenenfalls ist vor dem Inverter INV noch ein Teiler TL angeordnet, beispielsweise bestehend aus einem Multiplizierer mit umschaltbarem Teilungsverhältnis. Ein zweiter Dateneingang des umschaltbaren Addierers/Subtrahierers ist mit dem Ausgang eines ersten Speichers REGI verbunden. Der Dateneingang dieses ersten Speichers REGI ist mit dem Ausgangswert des Addierers/Subtrahierers ADD/SUB beaufschlagbar. Der Addierer/Subtrahierer ADD/SUB weist einen Steuereingang auf, über den ein Signal zuführbar ist, das festlegt, ob addiert oder subtrahiert werden soll. Der Addierer/Subtrahierer ADD/SUB zusammen mit dem Speicher REGI arbeitet als sogenannter "Random Walk Counter" mit beliebigem Increment/Decrement. Zugeführt wird ihm dies als Deltametrik über den schaltbaren Inverter INV. Der Überlauf "carry" des Addierers/Subtrahierers ADD/SUB wird dem Speicher REGI über seinen DISABLE-Eingang zugeführt. Der Ausgang des ersten Speichers REGI führt das Ergebnis auf einen Subtrahierer SUBI, der dieses mit einem Schwellwert THRI vergleicht. Dieser Vorgang geschieht auf einer Breite von beispielsweise 8 Bit, um einen weiten Bereich der Schwellwerteinstellung zu bekommen. Die Summenbildung kann diesen Bereich ebenfalls erforderlich machen.

Der Befehl zum Addieren/Subtrahieren ist starr verkoppelt mit dem INVERT/NON INVERT-Befehl für den Inverter INV, d.h. inkrementiert wird mit dem Einerkomplement der Deltametrik 15-DELTA-M, dekrementiert mit der Deltametrik DELTA-M selbst, wobei DELTA-M mit variablen Faktoren bewertet werden kann.

Dieser Befehl wird seinerseits aus den oben genannten Bedingungen 1) und 2) abgeleitet, d.h. es wird zunächst die Deltametrik selbst mit Hilfe eines Subtrahierers SUBII mit einer Schwelle THRII verglichen. Außerdem erfolgt eine Bildung des zeitlichen Differentialquotienten-Vorzeichens mit Hilfe eines zweiten Speichers REGII und eines weiteren Subtrahierers SUBIII in der Weise, daß der alte Metrikwert vom neuen subtrahiert wird und das Ergebnis über das Carry den Subtrahierer SUBIII verläßt. Beide Ergebnisse gelangen auf eine Befehlsgeberverknüpfungslogik BGV.

Diese stellt nun aus den vier möglichen Kombinationen für das Differentialquotienten-Vorzeichen und dem Carry-Signal am Ausgang des Subtrahierers SUBII eine Verknüpfung her zur Ausgabe eines Befehls, ob addiert oder subtrahiert bzw. invertiert oder nicht invertiert werden soll. Eine Invertierung entspricht hierbei einer Addition ADD und eine Nichtinvertierung einer Subtraktion SUB. Eine mögliche Verknüpfung gibt folgende Tabelle wieder:

| Diff. Quot. | Ergebnis SUBII | Befehlsausgabe |
|---|---|---|
| $\geq 0$ | $\geq 0$ | SUB |
| $< 0$ | $\geq 0$ | ADD |
| $\geq 0$ | $< 0$ | ADD |
| $< 0$ | $< 0$ | ADD |

In diesem Verknüpfungsbeispiel wird addiert, wenn eine Bedingung schlecht im Sinne einer Signalverfälschung ist, ansonsten subtrahiert. Die Befehlsgeberverknüpfungslogik kann in Form eines EPROMs oder eines Multiplexers als Funktionsgenerator implementiert werden, je nachdem, welche Geschwindigkeit gefordert ist.

Das Befehlsausgabesignal wird dem Steuereingang des umschaltbaren Addierers/Subtrahierers ADD/SUB, dem Steuereingang des schaltbaren Inverters INV und gegebenenfalls einem Steuereingang des Teilers TL zugeführt.

Die Speicher REGI und REGII werden von einem gemeinsamen Systemtakt CL gesteuert.

Eine andere Variante zur Gewinnung des Phasenfehlersignals FAIL ist in Fig. 5 dargestellt. Wie beim Ausführungsbeispiel nach Fig. 4 erfolgt die Ermittlung des Differentialquotienten-Vorzeichens (REGII′, SUBIII′) und der Vergleich der Deltametrik mit einer Schwelle THRII′ mittels Subtrahierer SUBII′. Diese Ergebnisse gelangen auf den Befehlsgeber BGV′. Dieser Befehlsgeber BGV′ kann durch ein EPROM realisiert werden mit einer folgenden Wahrheitstabelle:

| Ausgangssignal SUBIII′ | Ausgangssignal SUBII′ | Ausgangssignal BGV′ |
|---|---|---|
| $\geq 0$ | $\geq 0$ | L |
| $< 0$ | $\geq 0$ | H |
| $\geq 0$ | $< 0$ | H |
| $< 0$ | $< 0$ | H |

Das Ausgangssignal des Befehlsgebers BGV′ wird zum Enable-Eingang EN eines Aufwärtszählers UP-CNT geführt. Die Kurzzeitimpulse, die BGV′ liefert, stellen ein Fehlersignal dar, wenn vorgegebene Schwellwertbedingungen der Ausgangssignale von SUBII′ und SUBIII′ gemäß der Wahrheitstabelle von BGV′ verletzt werden; hier beispielsweise H-Pegel. Die Kurzzeitimpulse werden innerhalb eines Zeitfensters gezählt, wobei kurzzeitige Änderungen hervorgerufen durch Rauschanteile, unterdrückt werden sollen, und das Zählergebnis wird mit einem Schwellwert THRI′ mittels des Subtrahierers SUBI′ verglichen. Das Zählen innerhalb eines solchen Zeitfensters wird mit einem sogenannten "integrate and dump" Zählprozeß ausgeführt mittels eines Aufwärts-(UP-CNT) und eines Abwärts-(DOWN-CNT) Zählers und einer Verknüpfungslogik zwischen diesen beiden Zählern in Form eines OR-Gliedes. Die Länge des Zählzeitfensters wird mit dem Abwärtszähler DOWN-CNT eingestellt. Hierzu wird eine Zeitkonstante TC über die Load-Eingänge eingestellt. Das Load-Kommando LC zum Einlesen der Zeitkonstanten TC über die Paralleleingänge von DOWN-CNT ist das Ausgangssignal des OR-Gliedes. Beide Zähler sowie der Speicher REGII′ werden durch den Takt CL getaktet. Der Abwärtszähler DOWN-CNT zählt ausgehend von der eingestellten Zeitkonstante in Richtung 0. Wenn der Abwärtszähler 0 erreicht hat bevor der Aufwärtszähler den Schwellwert THRI′ erreicht, erscheint am Ausgang des Subtrahierers SUBI′ kein Phasenfehlersignal FAIL. Der Auswärtszähler wird dann zurückgesetzt, und der Abwärtszähler wird erneut mit der Zeitkonstanten TC geladen.

Falls der Aufwärtszähler den Schwellwert THRI′ erreicht hat, bevor der Abwärtszähler 0 erreicht, erscheint am Aufgang des Subtrahierers SUBI′ ein FAIL-Signal, welches der Stufe zur Phasenmehrdeutigkeitsauflösung (Fig. 3) über ein Flip-Flop FF zugeführt wird. Dieses Flip-Flop FF wird mit einem Takt CL″ getaktet, welcher langsamer als der Takt CL gewählt wird. Der Grund hierfür liegt darin, daß das FAIL-Signal für die Weiterverarbeitung noch gehalten werden muß.

Im Falle von zu erwartenden Phasensprüngen, wie sie bei der QPSK oder 8PSK Modulation vereinbart sind, wird der Schwellwert THRI′ sehr schnell erreicht, was ein FAIL-Signal zur Folge hat. Fehlerbursts, die ein richtiges Codewort vortäuschen, werden unterdrückt.

**Patentansprüche**

1. Verfahren zum Aufbereiten von Steuersignalen zur Auflösung der Phasenmehrdeutigkeit bei der Demodulation von n-PSK-Signalen, codiert in der Weise, daß die Binärwertigkeit dem Phasenwinkel proportional ist, gekennzeichnet durch folgende Schritte:
   - Ermitteln der Phasenwinkelsprungrichtung durch Differenzbildung aus einem aktuellen Zählerstand eines Zählers (CNT) zum Zählen eines vom Systemtakt (CL) abgeleiteten Signals und einem zuvor festgestellten Zählerstand dieses Zählers (CNT),
   - Starten dieses Zählers (CNT) zum Aufwärtszählen der Binärwertigkeit, wenn die Phasenwinkelsprungrichtung positiv ist,
   - Starten dieses Zählers (CNT) zum Abwärtszählen der Binärwertigkeit, wenn die Phasenwinkelsprungrichtung negativ ist,
   - Ausgeben des Zählerstandes als Steuersignal (C1, C2).

2. Verfahren nach Anspruch 1, gekennzeichnet durch
   - Steuern des Zählers (CNT) in Abhängigkeit eines Signals, welches eine Phasenfehlerinformation enthält in dem Sinne, daß beim Auftreten eines solchen Signals der Zähler (CNT) zum Zählen freigegeben wird, und beim Verschwinden dieses Signals arretiert wird.

3. Anordnung zum Aufbereiten von Steuersignalen zur Auflösung der Phasenmehrdeutigkeit bei der Demodulation von n-PSK-Signalen, codiert in der Weise, daß die Binärwertigkeit dem Phasenwinkel proportional ist, zum Durchführen des Verfahrens nach Anspruch 1 oder 2, gekennzeichnet durch
   - einen Zähler (CNT) mit
   a) einem ENABLE-Eingang zur Zuführung eines Phasenfehlersignals (FAIL),
   b) einem Takteingang zur Beaufschlagung mit einem heruntergeteilten Systemtakt (CL'),

- einen ersten Speicher (REGI) mit
  a) einem Dateneingang für die Ausgangssignale des Zählers (CNT),
  b) Einem DISABLE-Eingang zur Zuführung des Phasenfehlersignals (FAIL),
- einen Subtrahierer (SUB) mit
  a) einem ersten Dateneingang zur Zuführung der Ausgangssignale des Zählers (CNT),
  b) einem zweiten Dateneingang zur Zuführung der Ausgangssignale des ersten Speichers (REGI),
- einem Befehlsgeber (BG) mit
  a) einem Adreßsteuereingang für die Ausgangssignale des Subtrahierers (SUB),
  b) einem Dateneingang zur Zuführung von Befehlssätzen, wobei diese Befehlssätze das Aufwärts-/ das Abwärtszählen des Zählers (CNT) und die Beibehaltung des zuvor festgestellten Wertes bei einer Phasensprungdifferenz von 180° umfassen,
- einen zweiten Speicher (REGII) mit
  a) einem Dateneingang für die Ausgangssignale des Befehlsgebers (BG)
  b) einem DISABLE-Eingang zur Zuführung des Phasenfehlersignals (FAIL),
  c) einem Datenausgang, welcher mit dem Zählrichtungssteuereingang des Zählers (CNT) verbunden ist,
- einen Steuersignalausgang (STA) zur Ausgabe des Zählerstandes des Zählers (CNT).

4. Anordnung nach Anspruch 3, gekennzeichnet durch einen Systemtaktteiler (STT) mit einem Freigabeeingang, welcher vom Phasenfehlersignal (FAIL) beaufschlagbar ist.

5. Anordnung nach Anspruch 3, dadurch gekennzeichnet, daß der Befehlsgeber (BG) durch einen Multiplexer (MUX) als Funktionsgenerator oder durch einen Festwert-Speicher (EPROM) realisiert ist.

6. Verfahren nach Anspruch 2, gekennzeichnet durch die folgenden Schritte zur Gewinnung der Phasenfehlerinformation aus einem Faltungscodesignal:
   - Bilden der Differenz zwischen minimaler und maximaler Pfadmetrik des Faltungscodesignals,
   - Auswerten von Betrag und zeitlicher Änderung dieser Differenzmetrik bezüglich Größe und Vorzeichen,
   - Aufsummieren bzw. Subtrahieren von aus der Differenzmetrik abgeleiteten Werten,
   - Subtrahieren eines zuvor festgestellten von einem aktuellen Betrag der Aufsummierung, wenn die zeitliche Änderung der Differenzmetrik positiv ist,
   - Addieren des Komplements des zuvor festgestellten zum aktuellen Betrag der Aufsummierung, wenn die zeitliche Änderung der Differenzmetrik negativ ist,
   - Vergleichen der Aufsummierung mit einem Schwellwert,
   - Ausgeben eines Fehlersignals, wenn die Aufsummierung den Schwellwert überschreitet.

7. Verfahren nach Anspruch 6, gekennzeichnet durch
   - Ableiten des Befehls, ob subtrahiert oder addiert werden soll, aus der Pfadmetrikdifferenz.

8. Anordnung nach Anspruch 3 zum Durchführen des Verfahrens nach Anspruch 6, gekennzeichnet durch
   - eine Stufe (DELTA-M) zur Bildung der Differenz zwischen minimaler und maximaler Pfadmetrik,
   - einen schaltbaren Inverter (INV) mit
     a) einem Dateneingang, der an den Ausgang vorgenannter Stufe (DELTA-M) angeschlossen ist,
     b) einem Steuereingang zur Umschaltung zwischen Invertierung/Nichtinvertierung,
   - einen umschaltbaren Addierer/Subtrahierer (ADD/SUB) mit
     a) einem ersten und zweiten Dateneingang, wobei der erste Dateneingang mit dem Ausgang des schaltbaren Inverters (INV) verbunden ist,
     b) einem Steuereingang für das Umschalten zwischen Addieren und Subtrahieren,
   - einen ersten Speicher (REGI) mit
     a) einem Dateneingang, der mit dem Ausgang des umschaltbaren Addierers, Subtrahierers (ADD/SUB) verbunden ist,
     b) einem Datenausgang, der mit dem zweiten Eingang des umschaltbaren Addierers/Subtrahierers (ADD/SUB) verbunden ist,
     c) einem DISABLE-Eingang, der mit einem Überlauf-Ausgang des umschaltbaren Addierers/Subtrahierers (ADD/SUB) verbunden ist,
   - einen ersten Subtrahierer (SUBI) mit

a) einem ersten Dateneingang, der an den Ausgang des ersten Speichers (REGI) angeschlossen ist,

b) einem zweiten Dateneingang, der mit einem ersten Schwellwert (THRI) beaufschlagt ist,

c) einem Datenausgang für den Übertrag, der das Phasenfehlersignal bildet,

- einen zweiten Subtrahierer (SUBII) mit

a) einem ersten Dateneingang, der mit dem Ausgang der Stufe (DELTA-M) zur Bildung der Pfadmetrikdifferenz verbunden ist,

b) einem zweiten Dateneingang, der mit einem zweiten Schwellwert (THRII) beaufschlagbar ist,

c) einem dritten Subtrahierer (SUBIII) zur Bildung des Differenzialquotienten der Pfadmetrikdifferenz mit einem ersten und zweiten Dateneingang, wobei der erste Dateneingang mit dem Ausgang der Stufe (DELTA-M) zur Bildung der Pfadmetrikdifferenz verbunden ist,

- einen zweiten Speicher (REGII), dessen Eingang an den Ausgang der Stufe (DELTA-M) zur Bildung der Pfadmetrikdifferenz und dessen Ausgang an den zweiten Dateneingang des dritten Subtrahierers (SUBIII) angeschlossen ist,

- einen Befehlsgebers (BGV) mit

a) einem ersten Dateneingang, der mit dem Übertrag des zweiten Subtrahierers (SUBII) beaufschlagbar ist,

b) einem zweiten Dateneingang, der mit dem Übertrag des dritten Subtrahierers (SUBIII) beaufschlagbar ist,

c) einer Befehlsgeberverknüpfungslogik, die derart ausgebildet ist, daß sie

I) den Steuereingang des umschaltbaren Addierers/Subtrahierers (ADD/SUB) zum Subtrahieren und den Steuereingang des schaltbaren Inverters (INV) zum Nichtinvertieren veranlaßt, wenn der mittels des dritten Subtrahierers (SUBIII) gebildete Differentialquotient positiv ist und der Ausgang des zweiten Subtrahierers (SUBII) einen Übertrag aufweist,

II) den Steuereingang des umschaltbaren Addierers/Subtrahierers (ADD/SUB) zum Addieren und den Steuereingang des schaltbaren Inverters (INV) zum Invertieren veranlaßt, wenn der mittels des dritten Subtrahierers (SUBIII) gebildete Differentialquotient negativ ist und/oder der Ausgang des zweiten Subtrahierers (SUBII) keinen Übertrag aufweist.

9. Anordnung nach Anspruch 8, gekennzeichnet durch einen Teiler (TL) vor dem Inverter (INV).

10. Anordnung nach Anspruch 6 oder 7,
gekennzeichnet durch

- eine Stufe (DELTA-M) zur Bildung der Differenz zwischen minimaler und maximaler Pfadmetrik,

- einen Subtrahierer (SUBII') mit

a) einem ersten Dateneingang, der mit dem Ausgang der Stufe (DELTA-M) zur Bildung der Pfadmetrikdifferenz verbunden ist,

b) einem zweiten Dateneingang, der mit einem Schwellwert (THRII') beaufschlagbar ist,

- einen weiteren Subtrahierer (SUBIII') zur Bildung des Differentialquotienten der Pfadmetrikdifferenz, wobei

a) der erste Eingang dieses Subtrahierers mit dem Ausgang der Stufe (DELTA-M) zur Bildung der Pfadmetrikdifferenz

b) und der zweite Eingang über einen Speicher (REGII') zur Abspeicherung des vorherigen Pfadmetrikdifferenzwertes mit dem Ausgang der Stufe (DELTA-M) zur Bildung der Pfadmetrikdifferenz verbunden ist,

- einem Befehlsgeber (BGV') mit

a) einem ersten Dateneingang, der mit dem Übertrag (CARRY) des Subtrahierers (SUBII') beaufschlagbar ist,

b) einem zweiten Dateneingang, der mit dem Übertrag des weiteren Subtrahierers (SUBIII') beaufschlagbar ist,

c) einer Befehlsgeberverknüpfungslogik, die derart ausgestaltet ist, daß ein Fehlersignal erzeugt wird, wenn vorgegebene Schwellwertbedingungen für den ermittelten Differentialquotienten und den Übertrag des Subtrahierers (SUBII') eintreten,

- einen "integrate and dump"-Zähler, am Ausgang des Befehlsgebers (BGV'), bestehend aus einem Aufwärts-(UP-CNT) und einem Abwärts-(DOWN-CNT),

- einen Subtrahierer (SUBI') am Ausgang des "integrate and dump"-Zähler, der bei überschreiten eines Schwellwertes (THRI') ein Phasenfehlersignal (FAIL) liefert.

11. Anordnung nach Anspruch 10, gekennzeichnet durch
- eine Verknüpfungslogik (OR) zwischen Aufwärts-(UP-CNT)-und Abwärts-(DOWN-CNT)- Zähler mit
a) einem ersten Eingang beaufschlagt mit dem Übertragungssignal des Abwärtszählers (DOWN-CNT),
b) einem zweiten Eingang beaufschlagt mit dem Ausgangssignal des Subtrahierers (SUBI'),
c) einem Ausgang, der mit dem Rücksetzeingang des Aufwärtszählers (UP-CNT) und mit dem LOAD-Eingang des Abwärtszählers (DOWN-CNT) verbunden ist.

12. Verwendung der Anordnung nach einem der Ansprüche 3, 4 oder 5, zur Steuerung eines Transformationsnetzwerkes am digitalen Eingang eines Faltungs-Decoders, welches die bei der Trägerrückgewinnung auftretende Phasenmehrdeutigkeit aufhebt.

**Claims**

1. A method for processing control signals for the resolution of phase ambiguity in the demodulation of n-PSK signals that are encoded in such a manner that their binary value is proportional to the phase angle, characterised by the following steps:
- determining the direction of the phase angle jump by forming the difference between a current counting state of a counter (CNT) for counting a signal derived from the system clock pulse (CL) and a previously determined counting state of said counter (CNT);
- starting said counter (CNT) for upward counting of the binary values whenever the phase angle jump direction is positive;
- starting said counter (CNT) for downward counting of the binary values whenever the phase angle jump direction is negative; and
- putting out the counter state in the form of a control signal (C1, C2).

2. A method according to claim 1, characterised by
- controlling the counter (CNT) as a function of a signal which includes a phase error information in the sense that, upon the appearance of such a signal, the counter (CNT) is enabled for counting and, upon the disappearance of this signal, the counter is stopped.

3. An arrangement for processing control signals for the resolution of phase ambiguity in the demodulation of n-PSK signals that are encoded in such a manner that their binary value is proportional to the phase angle for implementing the method according to claim 1 or 2, characterised by
- a counter (CNT) including:
(a) an ENABLE input for supplying a phase error signal (FAIL),
(b) a clock input for charging with a subdivided system clock pulse (CL');
- a first memory (REGI) including:
(a) a data input for the output signals of the counter (CNT);
(b) a DISABLE input for supplying the phase error signal (FAIL);
- a subtractor (SUB) including:
(a) a first data input for supplying the output signals of the counter (CNT);
(b) a second data input for supplying the output signals of the first memory (REGI);
- an instruction generator (BG) including:
(a) an address control input for the output signals of the subtractor (SUB);
(b) a data input for supplying sets of instructions, with said sets of instructions including the upward and downward counting of the counter (CNT) and the maintaining of the previously determined value upon a phase jump difference of 180°;
- a second memory (REGII) including:
(a) a data input for the output signals of the instruction generator (BG);
(b) a DISABLE input for supplying the phase error signal (FAIL);
(c) a data output which is connected to the counting direction control input of the counter (CNT); and
- a control signal output (STA) for putting out the counter state of the counter (CNT).

4. An arrangement according to claim 3, characterised by a system clock divider (STT) having an enable input, which can be charged by the phase error signal (FAIL).

**5.** An arrangement according to claim 3, characterised in that the instruction generator (BG) is realised by a multiplexer (MUX) as a function generator, or by a permanent memory (EPROM).

**6.** A method according to claim 2, characterised by the following steps for recovering phase error information from a convolution code signal:
- forming the difference between the minimum and the maximum path metric of the convolution code signal;
- evaluating the amount and change over time of this difference metric with respect to magnitude and algebraic sign;
- summing or subtracting values derived from the difference metric;
- subtracting a previously determined amount from a current amount of the summation if the change in the difference metric over time is positive;
- adding the complement of the previously determined amount to the current amount of the summation if the change in the difference metric over time is negative;
- comparing the sum with a threshold value;
- putting out an error signal if the sum exceeds the threshold value.

**7.** A method according to claim 6, characterised by:
- deriving the instruction whether to subtract or add from the path metric difference.

**8.** An arrangement according to claim 3 for implementing the method according to claim 6, characterised by:
- a stage (DELTA-M) for forming the difference between the minimum path metric and the maximum path metric;
- a switchable inverter (INV) including:
  (a) a data input connected to the output of the above-mentioned stage (DELTA-M);
  (b) a control input for switching between inverting and not inverting;
- a reversible adder/subtractor (ADD/SUB) including:
  (a) a first and second data input, with the first data input being connected with the output of the switchable inverter (INV);
  (b) a control input for switching between adding and subtracting;
- a first memory (REGI) including:
  (a) a data input connected with the output of the reversible adder, subtractor (ADD/SUB);
  (b) a data output connected with the second input of the reversible adder/subtractor (ADD/SUB);
  (c) a DISABLE input connected with an overflow output of the reversible adder/subtractor (ADD/SUB);
- a first subtractor (SUBI) including:
  (a) a first data input connected to the output of the first memory (REGI);
  (b) a second data input charged with a first threshold value (THRI);
  (c) a data output for the carry which constitutes the phase error signal;
- a second subtractor (SUBII) including:
  (a) a first data input connected with the output of the stage (DELTA-M) for forming the path metric difference;
  (b) a second data input which can be charged with a second threshold value (THRII);
  (c) a third subtractor (SUBIII) for forming the differential quotient of the path metric difference equipped with first and second data inputs, with the first data input being connected with the output of the stage (DELTA-M) for forming the path metric difference;
- a second memory (REGII) whose input is connected to the output of the stage (DELTA-M) for forming the path metric difference and whose output is connected to the second data input of the third subtractor (SUBIII);
- an instruction generator (BGV) including:
  (a) a first data input which can be charged with the carry from the second subtractor (SUBII);
  (b) a second data input which can be charged with the carry from the third subtractor (SUBIII);
  (c) an instruction generator logic linkage circuit configured in such a manner that it:
    (I) causes the control input of the reversible adder/subtractor (ADD/SUB) to subtract and the control input of the switchable inverter (INV) to not invert if the differential quotient formed by means of the third subtractor (SUBIII) is positive and the output of the second subtractor (SUBII) has a carry;

(II) causes the control input of the reversible adder/subtractor (ADD/SUB) to add and the control input of the switchable inverter (INV) to invert if the differential quotient formed by means of the third subtractor (SUBIII) is negative and/or the output of the second subtractor (SUBII) does not have a carry.

9. An arrangement according to claim 8, characterised by a divider (TL) ahead of the inverter (INV).

10. An arrangement according to claim 6 or 7, characterised by:
   - a stage (DELTA-M) for forming the difference between the minimum path metric and the maximum path metric;
   - a subtractor (SUBII') including:
     (a) a first data input connected with the output of the stage (DELTA-M) for forming the path metric difference;
     (b) a second data input that can be charged with a threshold value (THRII');
   - a further subtractor (SUBIII') for forming the differential quotient of the path metric difference, with
     (a) the first input of said subtractor being connected with the output of the stage (DELTA-M) for forming the path metric difference; and
     (b) the second input being connected by way of a memory (REGII') for storing the previous path metric difference value with the output of the stage (DELTA-M) for forming the path metric difference;
   - an instruction generator (BGV') including:
     (a) a first data input that can be charged with the carry (CARRY) of the subtractor (SUBII');
     (b) a second data input that can be charged with the carry of the further subtractor (SUBIII');
     (c) an instruction generator logic linkage circuit configured in such a way that an error signal is generated if predetermined threshold conditions apply for the determined differential quotient and the carry of the subtractor (SUBII');
   - an "integrate and dump" counter at the output of the instruction generator (BGV') comprising an upward counter (UP-CNT) and a downward counter (DOWN-CNT);
   - a subtractor (SUBI') at the output of the "integrate and dump" counter for furnishing a phase error signal (FAIL) if a threshold (THRI') is exceeded.

11. An arrangement according to claim 10, characterised by:
   - a logic linkage circuit (OR) between the upward counter (UP-CNT) and the downward counter (DOWN-CNT), including:
     (a) a first input charged with the carry signal of the downward counter (DOWN-CNT);
     (b) a second input charged with the output signal of the subtractor (SUBI');
     (c) an output connected with the reset input of the upward counter (UP-CNT) and with the LOAD input of the downward counter (DOWN-CNT).

12. Use of the apparatus according to one of claims 3, 4, or 5, for controlling a transformation network at the digital input of a convolution decoder so as to cancel the phase ambiguity appearing during recovery of the carrier.

**Revendications**

1. Procédé d'élaboration de signaux de commande pour éliminer l'ambiguïté de phase lors de la démodulation de signaux à modulation par n sauts discrets de la phase n-PSK, codés de façon que leur valeur binaire significative soit proportionnelle à l'angle de phase, procédé caractérisé par les pas suivants:
   - déterminer le sens du saut de l'angle de phase en formant la différence entre un état de comptage actuel d'un compteur (CNT) prévu pour le comptage d'un signal dérivé du signal d'horloge du système (CL) et un état de comptage précédemment déterminé de ce compteur (CNT),
   - démarrer ce compteur (CNT) pour le comptage, par valeur croissante, de la valeur binaire significative si le sens du saut de l'angle de phase est positif.
   - démarrer ce compteur (CNT) pour le comptage, par valeur décroissante, de la valeur binaire significative si le sens du saut de l'angle de phase est négatif.
   - émettre l'état de comptage du compteur en tant que signal de commande (C1, C2).

2. Procédé selon la revendication 1, caractérisé par le pas suivant,
   - commander le compteur (CNT) en fonction d'un signal qui contient une information concernant l'erreur de phase dans le sens que, lors de l'apparition d'un tel signal, le compteur (CNT) est déverrouillé pour procéder au comptage et que lors de la disparition de ce signal, il est verrouillé.

3. Dispositif pour l'élaboration de signaux de commande pour éliminer l'ambiguïté de phase lors de la démodulation de signaux n-PSK codés de façon que leur valeur binaire significative soit proportionnelle à l'angle de phase, pour la mise en oeuvre du procédé selon la revendication 1 ou 2, dispositif caractérisé par
   - un compteur (CNT) avec
     a) une entrée ENABLE/VALIDER pour amener un signal d'erreur de phase (FAIL)
     b) une entrée de signal d'horloge pour intervenir avec un signal d'horloge (CL') dont la période a été divisée,
   - une première mémoire (REGI) avec
     a) une entrée de données pour les signaux de sortie du compteur (CNT),
     b) une entrée DISABLE/INVALIDER pour amener le signal d'erreur de phase (FAIL),
   - un soustracteur (SUB) avec
     a) une première entrée de données pour amener les signaux de sortie du compteur (CNT),
     - b) une seconde entrée de données des signaux de sortie de la première mémoire (REGI),
   - un émetteur d'impulsion (BG) avec
     a) une entrée de commande d'adressage pour les signaux de sortie du soustracteur (SUB),
     b) une entrée de données pour amener des jeux d'instructions, ces jeux d'instructions comprenant la valeur fournie, par comptage par valeur croissante ou par valeur décroissante, par le compteur (CNT) et le maintien de la valeur précédemment déterminée en présence d'une différence de saut de phase de 180°,
   - une seconde mémoire (REGII) avec
     a) une entrée de données pour les signaux de sortie de l'émetteur d'instruction (BG)
     b) une entrée DISABLE/INVALIDER pour amener le signal d'erreur de phase (FAIL),
     c) une sortie de données qui est reliée à l'entrée de commande du sens de comptage du compteur (CNT),
   - une sortie du signal de commande (STA) pour émettre l'état de comptage du compteur (CNT).

4. Dispositif selon la revendication 3, caractérisé par un diviseur (STT) du signal d'horloge du système avec une entrée de déverrouillage où peut intervenir le signal d'erreur de phase (FAIL).

5. Dispositif selon la revendication 3, caractérisé par le fait que l'émetteur d'instruction (BG) est réalisé par un multiplexeur (MUX) sous forme d'un générateur de fonction, ou par une mémoire fixe (EPROM).

6. Procédé selon la revendication 2, caractérisé par les pas suivants pour obtenir l'information concernant l'erreur de phase à partir d'un signal d'un code à convolution:
   - former la différence entre la valeur mesurée minimale et la valeur mesurée maximale du trajet du signal du code à convolution.
   - analyser la valeur et la modification, en fonction du temps, de cette différence des valeurs mesurées du trajet en ce qui concerne sa valeur absolue et son signe.
   - additionner ou soustraire des valeurs dérivées de la différence des valeurs mesurées du trajet.
   - soustraire, de la valeur actuelle du résultat de l'addition, une valeur précédemment déterminée, si la modification, en fonction du temps, de la différence des valeurs mesurées du trajet est positive.
   - additionner, à la valeur actuelle du résultat de l'addition, le complément de la valeur précédemment déterminée, si la modification, en fonction du temps, de la différence des valeurs mesurées du trajet est négative,
   - comparer le résultat de l'addition avec une valeur de seuil, émettre un signal d'erreur si le résultat de l'addition dépasse la valeur de seuil.

7. Procédé selon la revendication 6, caractérisé par le pas suivant
   - déduire, de la différence des valeurs mesurées du trajet, l'instruction indiquant s'il faut soustraire ou additionner.

**8.** Dispositif selon la revendication 3, pour mise en oeuvre du procédé selon la revendication 6, caractérisé par
- un étage (DELTA-M) pour former la différence entre la valeur mesurée minimale et la valeur mesurée maximale du trajet,
- un inverseur commutable (INV) avec
  a) une entrée de données qui est reliée à la sortie de l'étage précité (DELTA-M),
  b) une entrée de commande pour commuter entre inversion/non inversion,
- un additionneur/soustracteur commutable (ADD/SUB) avec
  a) une première et une seconde entrées de données, la première entrée de données étant reliée avec la sortie de l'inverseur commutable (INV),
  b) une entrée de commande pour la commutation entre additionner et soustraire,
- une première mémoire (REGI) avec
  a) une entrée de données qui est reliée avec la sortie de l'additionneur/soustracteur commutable (ADD/SUB),
  b) une sortie de données qui est reliée avec la seconde entrée de l'additionneur/soustracteur commutable (ADD/SUB),
  c) une entrée DISABLE/INVALIDER qui est reliée avec une sortie de report de l'additionneur/soustracteur commutable (ADD/SUB),
- un premier soustracteur (SUBI) avec
  a) une première entrée de données qui est reliée à la sortie de la première mémoire (REGI),
  b) une seconde entrée de données sur laquelle intervient une première valeur de seuil (THRI),
  c) une sortie de données pour le report, qui forme le signal d'erreur de phase,
- un second soustracteur (SUBII) avec
  a) une première entrée de données qui est reliée avec la sortie de l'étage (DELTA-M) de formation de la différence des valeurs mesurées du trajet,
  b) une seconde entrée de données sur laquelle peut intervenir une seconde valeur de seuil (THRII),
  c) un troisième soustracteur (SUBIII) pour la formation de la dérivée de la différence des valeurs mesurées du trajet, avec une première et une seconde entrées de données, la première entrée de données étant reliée avec la sortie de l'étage (DELTA-M) de formation de la différence des valeurs mesurées du trajet,
- une seconde mémoire (REGII) dont l'entrée est reliée à la sortie de l'étage (DELTA-M) de formation de la différence des valeurs mesurées du trajet et dont la sortie est reliée à la seconde entrée de données du troisième soustracteur (SUBIII),
- un émetteur d'instruction (BGV) avec
  a) une première entrée de données sur laquelle peut intervenir le report du second soustracteur (SUBII),
  b) une seconde entrée de données sur laquelle peut intervenir le report du troisième soustracteur (SUBIII),
  c) un circuit logique de liaison de l'émetteur d'instruction qui est conçu de façon,
    I) à faire passer sur soustraire l'entrée de commande de l'additionneur/soustracteur commutable (ADD/SUB) et sur non inversion l'entrée de commande de l'inverseur commutable (INV), si la dérivée, formée au moyen du troisième soustracteur (SUBIII), est positive et si la sortie du second soustracteur (SUBII) présente un report.
    II) à faire passer sur additionner l'entrée de commande de l'additionneur/soustracteur commutable (ADD/SUB) et sur inversion l'entrée de commande de l'inverseur commutable (INV) si la dérivée, formée au moyen du troisième soustracteur (SUBIII), est négative et/ou si la sortie du second soustracteur (SUBII) ne présente pas de report.

**9.** Dispositif selon la revendication 8, caractérisé par un diviseur (TL) avant l'inverseur (INV).

**10.** Dispositif selon la revendication 6 ou 7,
      caractérisé par un étage
- un étage (DELTA-M) pour former la différence entre la valeur mesurée maximale et la valeur mesuré minimale du trajet,
- un soustracteur (SUBII') avec
  a) une première entrée de données qui est reliée avec la sortie de l'étage (DELTA-M) prévue pour former la différence des valeurs mesurées du trajet,

15

b) une seconde entrée de données, sur laquelle peut intervenir une valeur de seuil (THRII'),

- un autre soustracteur (SUBIII') pour former la dérivée de la différence des valeurs mesurées du trajet, étant précisé que,

a) la première entrée de ce soustracteur est reliée avec la sortie de l'étage (DELTA-M) prévu pour former la différence des valeurs mesurées du trajet,

b) et que la seconde entrée est reliée, par l'intermédiaire d'une mémoire (REGII') prévue pour mémorisation de la valeur antérieure de la différence des valeurs mesurées du trajet, avec la sortie de l'étage (DELTA-M) prévu pour former la différence des valeurs mesurées du trajet.

- un émetteur d'instruction (BGV') avec

a) une première entrée de données sur laquelle peut intervenir le report (CARRY) du soustracteur (SUBII'),

b) une seconde entrée de données sur laquelle peut intervenir le report de l'autre soustracteur (SUBIII'),

c) un circuit logique de liaison de l'émetteur d'instruction qui est conçu de façon que soit produit un signal d'erreur lorsqu'apparaissent les conditions prescrites de valeur de seuil pour les dérivées obtenues et pour le report du soustracteur (SUBII'),

- un compteur "integrate and dump/intégrer et vider", à la sortie de l'émetteur d'instruction (BGV'), constitué d'un compteur par valeur croissante (UP-CNT) et d'un compteur par valeur décroissante (DOXN-CNT),

- un soustracteur (SUBI') à la sortie du compteur "integrate and dump/intégrer et vider" qui fournit un signal d'erreur de phase (FAIL) en cas de dépassement d'une valeur de seuil (THRI')

**11.** Dispositif selon la revendication 10, caractérisé par

- un circuit logique de liaison (OU) entre le compteur par valeur croissante (UP-CNT) et le compteur par valeur décroissante (DOXN-CNT) avec

a) une première entrée sur laquelle intervient le signal de transmission du compteur par valeur décroissante (DOWN-CNT),

b) une seconde entrée sur laquelle intervient le signal de sortie du soustracteur (SUBI'),

c) une sortie qui est reliée avec l'entrée de réinitialisation du compteur par valeur croissante (UP-CNT) et avec l'entrée LOAD/CHARGER du compteur par valeur décroissante (DOWN-CNT).

**12.** Application du dispositif selon l'une des revendications 3, 4 ou 5, pour commander, à l'entrée numérique d'un décodeur à convolutions, un réseau de transformation qui supprime l'ambiguïté de phase apparaissant lors de la récupération de la porteuse.

FIG. 1

EP 0 300 476 B1

MX1

$Q_1$   A/D   MUX   G1   G2

$E01$

$E02$

MX2

$Q_2$   A/D   MUX   G12

"7-$Q_1$"

"7-$Q_2$"

3   ADD1   4   $R_{00}$
(bei $C_1 = C_2 = "0"$)

3   ADD2   4   $R_{10}$
(bei $C_1 = C_2 = "0"$)

3   ADD3   4   $R_{01}$
(bei $C_1 = C_2 = "0"$)

3   ADD4   4   $R_{11}$
(bei $C_1 = C_2 = "0"$)

3   3

C1   C2

FIG. 2

FIG. 3

EP 0 300 476 B1

FIG.4

EP 0 300 476 B1

Fig.5

EP 0 300 476 B1